# EUROPÄISCHE PATENTSCHRIFT

(11) **EP 0 925 548 B1**
(45) Veröffentlichungstag und Bekanntmachung des Hinweises auf die Patenterteilung: **28.03.2001**
(21) Anmeldenummer: 97944877.6
(22) Anmeldetag: 13.09.1997
(51) Int. Cl.: G06K 7/00

(54) **VERFAHREN ZUM ÜBERTRAGEN VON DATEN IN EINEM RADIOFREQUENZ IDENTIFIKATIONS-SYSTEM**
DATA TRANSFER METHOD FOR A RADIO FREQUENCY IDENTIFICATION SYSTEM
TECHNIQUE DE TRANSFERT DE DONNEES DANS UN SYSTEME D'IDENTIFICATION A BALAYAGE

(30) Priorität: 13.09.1996 DE 19637319
(43) Veröffentlichungstag der Anmeldung: 30.06.1999
(73) Patentinhaber: ATMEL Germany GmbH, 74072 Heilbronn (DE)
(72) Erfinder: BRUHNKE, Michael, D-80809 München (DE); BLATZ, Werner, D-74211 Leingarten (DE); FRIEDRICH, Ulrich, D-74248 Ellhofen (DE); GROSSKINSKY, Ulrich, D-74861 Neudenau (DE)
(74) Vertreter: Kolb, Georg
(86) Internationale Anmeldenummer: EP9705010
(87) Internationale Veröffentlichungsnummer: WO9811496

(56) Entgegenhaltungen:
- EP-A- 0 600 556
- EP-A- 0 689 151

## Beschreibung

Die Erfindung betrifft ein Verfahren zum übertragen von Daten in einem Radiofrequenz Identifikations-System von einem Transponder zu einem Lesegerät durch Belastungsmodulation eines vom Lesegerät ausgesendeten Abfragesignals

Bei der Identifikation von Personen, Tieren und Objekten hat sich in den letzten Jahren ein System bewährt, bei dem ein (stationäres bzw. tragbares) Lesegerät (Reader) einen mit dem zu identifizierenden Objekt verbundenen Transponder über ein Wechselfeld mit Energie versorgt, woraufhin der Transponder mit dem Aussenden der in ihm gespeicherten Daten antwortet. Aufgrund des verwendeten Frequenzbereichs spricht man auch von Radiofrequenz Identifikations-Systemen, kurz RFID.

Ein RFID-Transponder besteht im allgemeinen aus einer Antennenspule und einem integrierten Schaltkreis, der alle notwendigen elektronischen Schaltungsblöcke, wie z. B. zur spannungsversorgung, zur Taktgenerierung, zur Ablaufsteuerung und zur Speicherung der für die Identifizierung notwendigen Daten, beinhaltet. Die zur Antennenspule parallelgeschaltete Kapazität ist ebenfalls häufig Bestandteil des integrierten Schaltkreises. Sie kann jedoch auch durch ein diskretes Bauelement gebildet werden.

Das RFID-Lesegerät besteht aus einem Schwingkreis mit einer Sendespule und einer Kapazität, der von einer Treiberstufe mit einem Signal mit einer im allgemeinen festen Frequenz (z. B. 125 kHz) angesteuert wird. Weiterhin enthält das Lesegerät elektronische Schaltungsblöcke, um die durch die Absorptionsmodulation vom Transponder gesendeten Daten zu erkennen und um Daten und Befehle, z. B. durch Modulation des Feldes, an den Transponder zu senden.

Lesegerät und Transponder bilden bei der Daten- bzw. bei der Energieübertragung einen lose gekoppelten Transformator. Deshalb ist die Energieübertragung relativ gering.

Bei den meisten Identifikations Anwendungen von Transponder Lese Gerät Systemen ist es wünschenswert und vorteilhaft, wenn die Identifizierung d.h. der Datenaustausch zwischen Transponder und Lesegerät ohne Verzögerung abläuft. So tritt zum Beispiel bei der Anwendung in Wegfahrsperren das Problem auf, daß beim Starten eines Kfz der Anwender eine Zeitdauer von mehr als 150 ms, vom Drehen des Zündschlüssels bis zum Starten des Motors, als Zeitverzögerung wahrnimmt. Daraus folgt, daß das gesamte Übertragungsprotokoll in diesem sehr kurzen Zeitraum abgelaufen sein muß.

Beim Einschalten des Feldes benötigt das Lesegerät ungefähr zwei Millisekunden bevor sich die hohe Spulenspannung von etwa 100 V aufgebaut hat und das durch die Modulation des Transponders entstehende geringe Nutzsignal in Höhe von einigen Millivolt ausgewertet und somit die Daten korrekt dekodiert werden können. Der zunächst vom Transponder gesendete ID-Code wird demnach erst bei der zweiten Sequenz erkannt, welches eine Zeitverzögerung des Datenprotokolls bedeutet. Ein ähnliches Problem tritt beim Wechsel von einem unbedämpften in den bedämpften Zustand, wie z. B. am Ende einer Schreibsequenz oder Programmiersequenz, auf.

Aufgabe der Erfindung ist es daher, ein Verfahren zum Übertragen von Daten in einem Radiofrequenz Identifikations-System von einem Transponders zu einem Lesegerät durch Belastungsmodulation eines vom Lesegerät ausgesendeten Abfragesignals anzugeben, das durch eine einmalige Datenübertragung das korrekte Ergebnis liefert.

Diese Aufgabe wird durch ein Verfahren mit den Merkmalen des Anspruchs 1 gelöst.

Bei einem Verfahren zum Übertragen von Daten in einem Radiofrequenz identifikations-System von einem Transponder zu einem Lesegerät durch Belastungsmodulation eines vom Lesegerät ausgesendeten Abfragesignals, wobei der Transponder bei Beginn des Empfangs des Abfragesignals initialisiert wird und mit dem Senden des Anwortsignals antwortet, werden zunächst eine vorbestimmte Anzahl von nicht zum Antwortsignal gehörenden Datenbits gesendet und anschließend solange in wiederkehrender Folge eine Terminatorsequenz gefolgt von dem Antwortsignal bis das Abfragesignal unterbrochen wird.

Durch die vorbestimmte Anzahl von nicht zum Antwortsignal gehörenden Datenbits wird die Zeitspanne überbrückt, die das Lesegerät zum Aufbau des Abfragefeldes benötigt. Gleichzeitig wird das Lesegerät zum Takt des Antwortsignals synchronisiert. Durch die Terminatorsequenz, die den Beginn eines gültigen Antwortsignals anzeigt, wird dieses bereits bei der ersten Übertragung korrekt vom Lesegerät erkannt.

Die Terminatorsequenz besteht vorteilhaft aus einer Bitfolge, die im eigentlichen Antwortsignal nicht auftreten kann. zum Beispiel wird beim Senden der Terminatorsequenz das Abfragesignal für eine Dauer von 1,5 Bitperioden unmoduliert wird. Eine derartige Sequenz kann im eigentlichen Antwortsignal nicht auftreten und wird daher vom Lesegerät sicher erkannt. Es ist auch möglich beim Senden der Terminatorsequenz das Abfragesignal für eine Dauer von 1,5 Bitperioden belastungszumodulierien. Wichtig für das sichere Erkennen ist die Zeitdauer von 1,5 Bitperioden, die vom Lesegerät sicher als Terminatorsequenz erkannt werden.

Als vorbestimmte Anzahl von nicht zum Antwortsignal gehörenden Datenbits werden eine Folge von 3 bis 10 logische Einsen gesendet. Innerhalb dieser Zeit hat sich im Allgemeinen das Abfragesignal soweit aufgebaut, daß das Belastungsmodulierte Antwortsignal vom Lesegerät sicher dekodiert werden kann.

Kurze Beschreibung der Figuren:
- Figur 1: Ablaufdiagramm des Verfahrens;
- Figur 2: zeigt einen Terminator in Datenfluß;
- Figur 3: zeigt eine Tabelle mit den Betriebszuständen, die zum senden des Terminators führen.

Um das eingangs genannte Problem zu umgehen, sendet der Transponder am Anfang der Datenübertragung, wie z. B. bei der Initialisierung, einige nicht relevante Datenbits, gefolgt von einem speziellen, datenuntypischen Muster (Terminator), das sich beispielsweise aus Sequenzen von 1,5 Bitperioden zusammensetzt. Dadurch wird das Lesegerät synchronisiert und zusätzlich wird durch die Terminatorsequenz der Beginn eines gültigen Datenwortes angezeigt, so daß dieses bereits bei der ersten Übertragung korrekt erkannt wird.

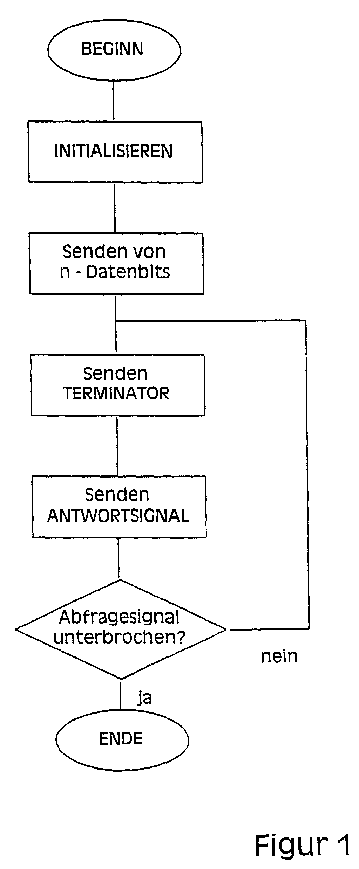

In der Figur 1 ist ein Ablaufdiagramm des Verfahrens dargestellt. Nach dem Empfang des vom Lesegerät erzeugten Abfragesignals, wird der Transponder, initialisiert. Die Initialisierung umfaßt zum einen das Einstellen der Kommunikationsparamenter sowie das Überführen des Transponders in einen definierten Anfangszustand. Anschließend beginnt der Transponder durch Belastungsmodulation des Abfragesignals Daten an das Lesegerät zu senden. um dem Lesegerät genügend Zeit zu geben ein in einem gewissen Rahmen konstantes Abfragesignal zu erzeugen, das zur sicheren Dekodierung der vom Transponder an das Lesegerät gesendeten Daten notwendig ist, werden vom Transponder zunächst eine vorbestimmte Anzahl von nicht zum Antwortsignal gehörenden Datenbits gesendet. Während dieser Zeit wird außerdem das Lesegerät auf das Antwortsignal synchronisiert.

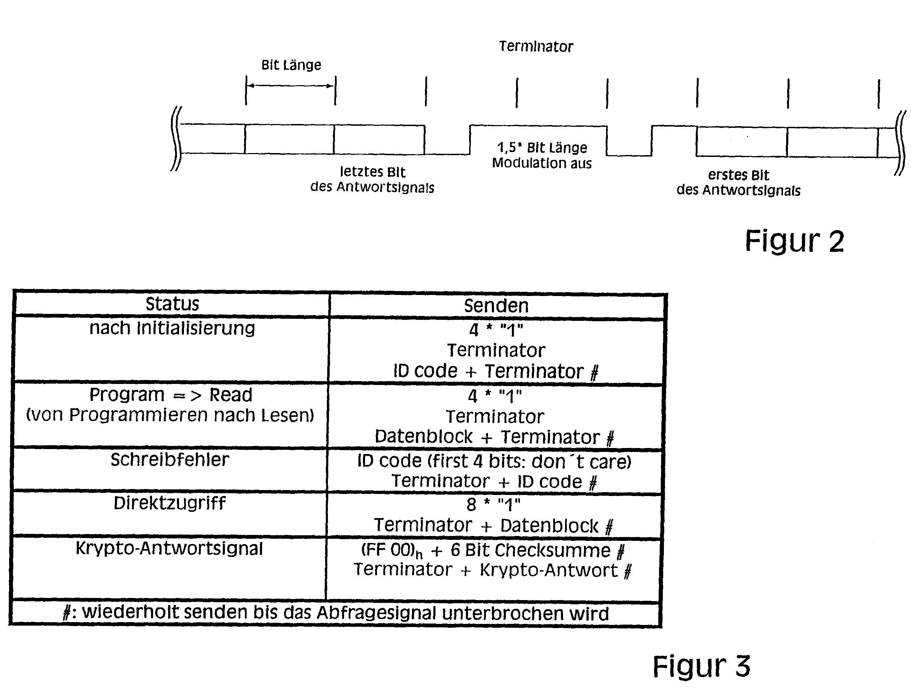

Anschließend wird eine Terminatorsequenz gesendet, die sich dadurch auszeichnet, daß sie im eigentlichen Datenfluß nicht vorkommen kann. Als besonders vorteilhaft hat sich eine 3 Bit lange Sequenz herausgestellt, bei der das Abfragesignal für eine Dauer von 1,5 Bitperioden unmoduliert wird. Die Figur 2 zeigt einen Terminator in Datenfluß. Neben der Eigenschaft, daß diese Sequenz im eigentlichen Datenfluß nicht vorkommen kann, zeichnet sie sich durch die sehr kurze Dauer aus.

Nach der Terminatorsequenz wird das Antwortsignal zum Lesegerät gesendet. Hat das Lesegerät die Terminatorsequenz erkannt, so wird mit einer sehr hohen Wahrscheinlichkeit das Antwortsignal sofort richtig dekodiert. Trotzdem wird das Antwortsignal gefolgt von einer Terminatorsequenz solange immer wieder vom Transponder gesendet bis das Abfragesignal unterbrochen wird. Dann ist entweder die Kommunikation zwischen dem Lesegerät und dem Transponder beendet oder das Lesegerät überträgt Daten oder Befehle zum Transponder.

In der Tabelle der Figur 3 sind eine Reihe von Betriebszuständen beschrieben, in denen es sinnvoll ist, eine Terminatorsequenz zu senden um die Effektivität der Datenübertragung zu steigern. So ist es neben der Initialisierung auch beim Übergang vom Schreibenden Zugriff auf den Lesenden Zugriff , nach einem Schreibfehler, bei Direktzugriff und beim Senden einer Crypto Antwort von Vorteil das Antwortsignal um die Terminatorsequenz zu ergänzen.

Vorteil: Die Daten können sofort bei der ersten Übertragung korrekt erkannt werden. Dadurch kommt es zu einer Verkürzung der Dauer der Datenübertragung.

## Patentansprüche

1. Verfahren zum Übertragen von Daten in einem Radiofrequenz Identifikations-System von einem Transponder zu einem Lesegerät durch Belastungsmodulation eines vom Lesegerät ausgesendeten Abfragesignals, wobei der Transponder bei Beginn des Empfangs des Abfragesignals initialisiert wird und mit dem Senden des Anwortsignals antwortet,
dadurch gekennzeichnet,
daß zunächst eine vorbestimmte Anzahl von nicht zum Antwortsignal gehörenden Datenbits gesendet werden und
daß anschließend solange in wiederkehrender Folge eine Terminatorsequenz gefolgt von dem Antwortsignal gesendet wird bis das Abfragesignal unterbrochen wird.

2. Verfahren zum Übertragen von Daten nach Anspruch 1, dadurch gekennzeichnet, daß die Terminatorsequenz aus einer Bitfolge besteht, die im eigentlichen Antwortsignal nicht auftreten kann.

3. Verfahren zum Übertragen von Daten nach Anspruch 1 oder 2, dadurch gekennzeichnet, daß beim Senden der Terminatorsequenz das Abfragesignal für eine Dauer von 1,5 Bitperioden nicht moduliert wird.

4. Verfahren zum Übertragen von Daten nach Anspruch 1 oder 2, dadurch gekennzeichnet, daß beim Senden der Terminatorsequenz das Abfragesignal für eine Dauer von 1,5 Bitperioden belastungsmoduliert wird.

5. Verfahren zum Übertragen von Daten nach einem der Ansprüche 1 - 4,
dadurch gekennzeichnet, daß als vorbestimmte Anzahl von nicht zum Antwortsignal gehörenden Datenbits eine Folge von 3 bis 10 logische Einsen gesendet werden.

6. Verfahren zum übertragen von Daten nach einem der Ansprüche 1 - 4,
dadurch gekennzeichnet, daß als vorbestimmte Anzahl von nicht zum Antwortsignal gehörenden Datenbits eine Folge von 3 bis 10 logische Nullen gesendet werden.

## Claims

1. A method of transmitting data from a transponder to a reading apparatus in a radio frequency identification system by load modulating an interrogation signal sent out by the reading apparatus, whereby the transponder is initialised when beginning to receive the interrogation signal and responds by sending an answer signal,
characterised in
that a predetermined number of data bits not belonging to the answer signal are initially sent and in
that a terminator sequence followed by the answer signal are thereafter sent in a recurring sequence until the interrogation signal is interrupted.

2. A method of transmitting data in accordance with Claim 1, characterised in that the terminator sequence consists of a bit train which cannot occur in the real answer signal.

3. A method of transmitting data in accordance with Claim 1 or 2, characterised in that the interrogation signal is not modulated for the duration of 1.5 bit periods when the terminator sequence is being sent.

4. A method of transmitting data in accordance with Claim 1 or 2, characterised in that the interrogation signal is load modulated for the duration of 1.5 bit periods when the terminator sequence is being sent.

5. A method of transmitting data in accordance with any of the Claims 1 - 4, characterised in that a train of 3 to 10 logical ones is sent as the predetermined number of data bits not belonging to the answer signal.

6. A method of transmitting data in accordance with any of the Claims 1 - 4, characterised in that a train of 3 to 10 logical zeros is sent as the predetermined number of data bits not belonging to the answer signal.

## Revendications

1. Procédé pour la transmission des données dans un système d'identification à hautes fréquences depuis un transpondeur à un appareil de lecture au moyen d'une modulation de charge d'un signal d'interrogation émis par l'appareil de lecture, le transpondeur étant initialisé au début de la réception du signal d'interrogation et répondant en émettant un signal de réponse, caractérisé en ce que tout d'abord un nombre prédéterminé de bits de données, qui ne font pas partie du signal de réponse, sont émis, et qu'une séquence terminale suivie du signal de réponse est émise selon une séquence répétitive jusqu'à ce que le signal d'interrogation soit interrompu.

2. Procédé pour la transmission des données selon la revendication 1, caractérisé en ce que la séquence terminale est constituée par une suite de bits, qui ne peut pas apparaître dans le signal de réponse proprement dit.

3. Procédé pour la transmission des données selon la revendication 1 ou 2, caractérisé en ce que lors de l'émission de la séquence terminale, le signal d'interrogation n'est pas modulé pendant une durée de 1,5 période de bit.

4. Procédé pour la transmission des données selon la revendication 2, caractérisé en ce que lors de l'émission de la séquence terminale, le signal d'interrogation est modulé par la charge pendant une durée de 1,5 période de bit.

5. Procédé pour la transmission des données selon l'une des revendications 1-4, caractérisé en ce qu'une suite de 3 à 10 uns logiques est émise en tant que nombre prédéterminé de bits de données ne faisant pas partie du signal de réponse.

6. Procédé pour la transmission des données selon l'une des revendications 1-4, caractérisé en ce qu'une suite de 3 à 10 zéros logiques est émise en tant que nombre prédéterminé de bits de données ne faisant pas partie du signal de réponse.
